Europäisches Patentamt

European Patent Office

Office européen des brevets

(19)

(11) **EP 0 887 672 A1**

(12) # DEMANDE DE BREVET EUROPEEN

(43) Date de publication:
**30.12.1998 Bulletin 1998/53**

(51) Int Cl.⁶: **G02B 6/293**, G02B 6/34

(21) Numéro de dépôt: **98401473.8**

(22) Date de dépôt: **16.06.1998**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **25.06.1997 FR 9707952**

(71) Demandeur: **INSTRUMENTS S.A.**
**F-75001 Paris (FR)**

(72) Inventeur: **Laude, Jean-Pierre**
**91960 St-Cyr-La-Rivière par Saclas (FR)**

(74) Mandataire: **Michelet, Alain et al**
**Cabinet Harlé et Phélip,**
**7, rue de Madrid**
**75008 Paris (FR)**

(54) **Multiplexeur-démultiplexeur en longueur d'onde à fibres optiques**

(57) La présente invention concerne un multiplexeur-démultiplexeur en longueur d'onde à fibres optiques comportant un système dispersif (1) ayant un plan de dispersion, au moins une fibre d'entrée (2) ayant une face de sortie, au moins une fibre de sortie (3) ayant une face d'entrée, des moyens (4) de conjugaison optique de la face de sortie de la fibre d'entrée avec la face d'entrée de la fibre de sortie.

Le système dispersif et les moyens de conjugaison forment un système optique à foyers multiples transverses (6) dans le plan de dispersion.

FIG.3

EP 0 887 672 A1

## Description

La présente invention conceme un multiplexeur-démultiplexeur ou un routeur en longueur d'onde à fibres optiques, susceptible d'être utilisé comme composant dans les installations de télétransmissions par fibres optiques.

On connaît déjà de tels multiplexeurs-démultiplexeurs qui ont été décrits, puis progressivement perfectionnés, en particulier dans les brevets français FR-2.543.768, FR-2.519.148, FR-2.479.981, FR-2.496.260 et dans le brevet européen EP-0.196.963.

On entend ici par multiplexeur-démultiplexeur à fibres optiques, des dispositifs dans lesquels les ondes lumineuses d'entrée et de sortie sont propagées par des fibres optiques.

L'invention conceme également les routeurs à fibres optiques dans lesquels un nombre variable de flux d'entrée, ayant chacun une longueur d'onde particulière, propagés par des fibres optiques spatialement distinctes, sont adressés sur un nombre éventuellement différent de fibres de sorties.

Dans ces différents dispositifs, un système dispersif réalise le couplage, pour une longueur d'onde donnée entre une fibre de sortie et une fibre d'entrée.

On définit ainsi un canal qui a bien entendu une certaine largeur spectrale $\Delta\lambda$.

Les multiplexeurs-démultiplexeurs ou routeurs performants doivent simultanément permettre l'exploitation d'un grand nombre de canaux, chacun de ces canaux, centrés sur une longueur d'onde $\lambda$, doit avoir une largeur spectrale $\Delta\lambda$ aussi grande que possible, tout en évitant une quelconque diaphonie.

Il y a diaphonie lorsqu'une partie de l'énergie d'un canal est partiellement mélangée à l'énergie d'un canal adjacent. Il est bien connu que la diaphonie perturbe les communications et que les dispositifs présentant un taux de diaphonie excessif sont en pratique inutilisables.

Pour simplifier la description, le dispositif de l'invention sera qualifié de multiplexeur-démultiplexeur, étant bien entendu qu'il peut s'agir d'un multiplexeur, d'un démultiplexeur ou d'un routeur.

Le but de l'invention est donc de proposer un multiplexeur-démultiplexeur qui offre des propriétés améliorées et tout en conservant une bonne séparation des canaux, améliore la largeur spectrale de chacun d'eux.

Pour atteindre ce but, on propose, selon l'invention, de mettre en oeuvre des moyens optiques assurant la conjugaison entre la face de sortie de la fibre d'entrée et la face d'entrée de la fibre de sortie, qui sont un système optique à double foyer.

Ainsi, la fonction de transmission en longueur d'onde entre une fibre d'entrée et une fibre de sortie du multiplexeur est composée par la superposition des fonctions de transmission produites par le système optique, respectivement pour chacun de ses foyers.

Le décalage spatial des foyers produit un décalage spectral des fonctions de transfert élémentaire et permet donc de réaliser ainsi un élargissement de la fonction de transfert d'ensemble.

L'invention conceme donc un multiplexeur-démultiplexeur en longueur d'onde à fibres optiques comportant un système dispersif ayant un plan de dispersion, au moins une fibre d'entrée ayant une face de sortie, au moins une fibre de sortie ayant une face d'entrée, des moyens de conjugaison optique de la face de sortie de la fibre d'entrée avec la face d'entrée de la fibre de sortie.

Selon l'invention, le système dispersif et les moyens de conjugaison forment un système optique à foyers multiples transverses dans le plan de dispersion.

On appelle ici système optique à double foyer, tout système optique qui produit une image transversalement dédoublée d'un même point objet, qu'il soit placé à distance finie ou à l'infini. Un système à foyers multiples transverses forme plusieurs images du même point objet ; il peut former une suite continue d'images.

Selon différents modes de réalisation présentant chacun leurs avantages particuliers et susceptibles d'être mis en oeuvre selon toutes leurs combinaisons techniquement possibles :

- le dispositif comporte un miroir partiel placé devant un miroir complet,
- le miroir partiel est à claire-voie,
- le miroir partiel est semi-réfléchissant,
- le miroir partiel et le miroir complet sont des miroirs sphériques, de même focale, décalés l'un par rapport à l'autre, transversalement par rapport à leurs axes optiques,
- le miroir partiel et le miroir complet sont des miroirs sphériques, de même focale, l'axe optique de l'un d'entre eux formant un petit angle $\alpha$ avec l'axe optique de l'autre,
- le dispositif comporte un élément optique à foyers multiples transverses travaillant en transmission,
- cet élément optique est une lentille à foyers multiples transverses,
- cet élément optique est semi-prismatique,
- il comporte un réseau à pas multiples,
- il comporte un réseau à pas variables.

L'invention sera décrite plus en détail en référence aux dessins annexés dans lesquels :

- la figure 1 est un multiplexeur-démultiplexeur de l'art antérieur ;
- la figure 2 est la fonction de transfert élémentaire, pour un couple de fibres entrée-sortie du dispositif de la figure 1 ;
- la figure 3 est un multiplexeur-démultiplexeur selon l'invention ;
- la figure 4 est une représentation de la fonction de transfert du dispositif de la figure 3 ;
- les figures 5A et 5B sont un premier exemple de système optique double foyer utilisable dans le dispositif de l'invention mettant en oeuvre deux miroirs de même focale d'orientations différentes, selon une vue de face et une vue de dessus ;

- la figure 5C est une vue de côté représentant un miroir partiel, à claire-voie ;

- les figures 6A et 6B sont un exemple mettant en oeuvre deux miroirs de même focale, transversalement décalés, est un deuxième exemple de système optique double foyer utilisable dans le dispositif de l'invention, selon une vue de face et une vue de dessus ;

- la figure 7 mettant en oeuvre une lentille bifocale est un troisième exemple de système optique double foyer utilisable dans le dispositif de l'invention ;

- la figure 8 mettant en oeuvre un prisme agissant sur une partie du faisceau est un quatrième exemple de système optique double foyer utilisable dans le dispositif de l'invention ;

- la figure 9 mettant en oeuvre un système à prisme réparti dans la pupille ;

- la figure 10 est une représentation schématique d'un réseau à pas multiples.

Les figures représentent les composants optiques du dispositif de l'invention, indépendamment des structures mécaniques qui les portent et assurent leurs positionnements respectifs. Ces structures mécaniques peuvent revêtir de nombreuses formes et sont accessibles à l'homme du métier.

La présente description est faite par référence à l'utilisation de fibres optiques comme moyens d'entrée et de sortie du multiplexeur-démultiplexeur. Il est toutefois bien connu qu'il existe des composants émetteurs (diodes ou barrettes de diodes) et des composants récepteurs (CCD ou barrettes de CCD) dont les éléments actifs sont de petites dimensions, du même ordre de grandeur que les coeurs de fibres, de quelques microns à quelques dizaines de microns, et régulièrement répartis, dont les caractéristiques les rendent compatibles avec les fibres. Dans certaines applications, de tels composants peuvent remplacer les fibres en entrée ou en sortie du multiplexeur-démultiplexeur de l'invention et être placés à la place des extrémités desdites fibres directement au foyer spectral. De tels composants sont donc équivalents aux fibres dans la définition de l'invention.

La description ci-après fait référence à un multiplexeur-démultiplexeur. Il est également possible de mettre en oeuvre l'invention pour réaliser un routeur.

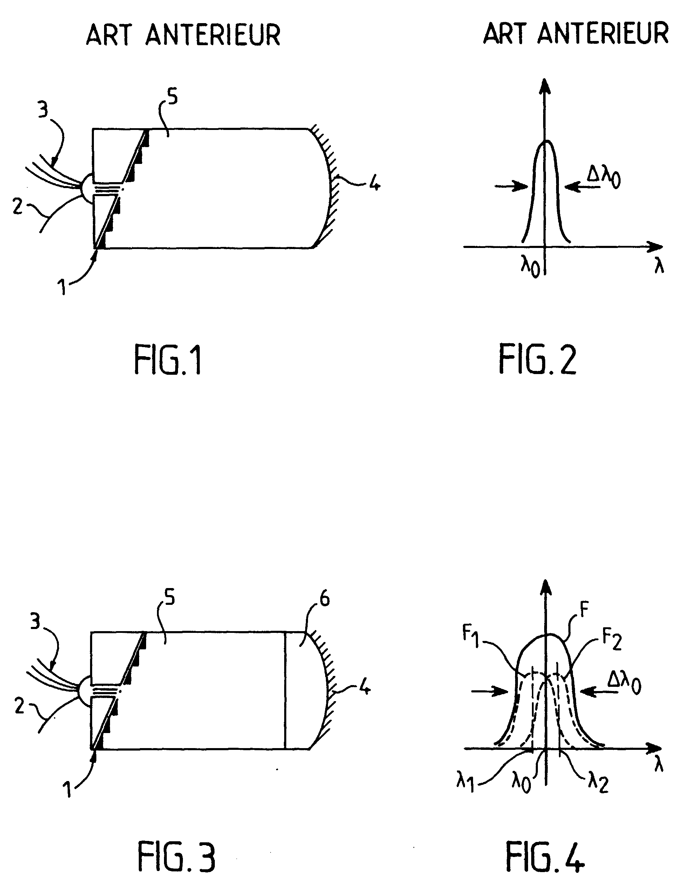

Le multiplexeur-démultiplexeur représenté sur la figure 1 comporte un système dispersif constitué par un réseau 1, une fibre d'entrée 2 qui alimente le dispositif en un flux lumineux multiplexé et un peigne de fibres de sortie 3 qui fournit des flux différenciés pour chacune des longueurs d'onde. Les extrémités de ces fibres 3 sont placées au centre du réseau 1, lui-même approximativement au foyer d'un système optique réfléchissant 4. L'espace 5 situé entre le réseau 1 et le miroir 4 peut recevoir différents composants optiques permettant en fonction des besoins, d'améliorer les propriétés du système. Le réseau 1 peut être holographique ou gravé.

Pour un tel système, la fonction de transfert élémentaire définissant la bande passante en longueur d'onde pour un couple fibre d'entrée-fibre de sortie a la forme représentée sur la figure 2. Elle est centrée sur la longueur d'onde $\lambda_o$ et sa largeur à mi-hauteur est $\Delta\lambda_o$. Cette largeur à mi-hauteur dépend de l'ensemble des caractéristiques géométriques et optiques du dispositif.

La figure 3 représente un multiplexeur-démultiplexeur selon l'invention dont les éléments analogues à ceux de la figure 1 ont été désignés par les mêmes références numériques. Le système optique 6 est un système à foyers multiples transverses, ici à double foyer, c'est-à-dire que le flux lumineux émis par l'une des fibres d'entrée, au lieu de converger en un point unique comme c'est le cas pour un système optique traditionnel, monofoyer, converge en deux points, respectivement $f_1$ et $f_2$.

La fonction de transfert élémentaire F d'un tel système est la somme de la fonction de transfert $F_1$ obtenue pour la partie du système optique convergent au point $f_1$ et de la fonction de transfert $F_2$ obtenue pour la partie du flux convergent au point $f_2$. La fonction de transfert résultante est alors la courbe F représentée sur la figure 4.

L'écartement des longueurs d'onde centrales $\lambda_1$ de la fonction de transfert $F_1$ et $\lambda_2$ de la fonction de transfert $F_2$ dépend de la distance des foyers $f_1$ et $f_2$ et la fonction de transfert résultante, correspondant aux dispositifs multiplexeurs-démultiplexeurs pris dans son ensemble, est la fonction de transfert F.

Un angle de $\alpha$ entre les axes $a_1$, $a_2$ joignant les sommets des miroirs (approximativement confondus) et les foyers f1 et f2 introduit un écartement

$$\lambda_1 - \lambda_2 \cong 4\alpha n \frac{d \cos\beta}{k}$$

où d est le pas du réseau et k l'ordre du réseau utilisé, n est l'indice du milieu de diffraction, $\beta$ est l'angle de la normale au réseau et la direction des rayons incidents et diffractés en condition de Littrow (dans lesquelles les angles d'incidence et de diffraction sont approximativement égaux).

Les largeurs à mi-hauteur $\Delta\lambda_1$ et $\Delta\lambda_2$ sont approximativement égales à la largeur à mi-hauteur $\Delta\lambda_o$ obtenue pour un système monofocal, la fonction de transfert d'ensemble F a, elle, une largeur $\Delta\lambda$ largement supérieure à cette largeur $\Delta\lambda_o$.

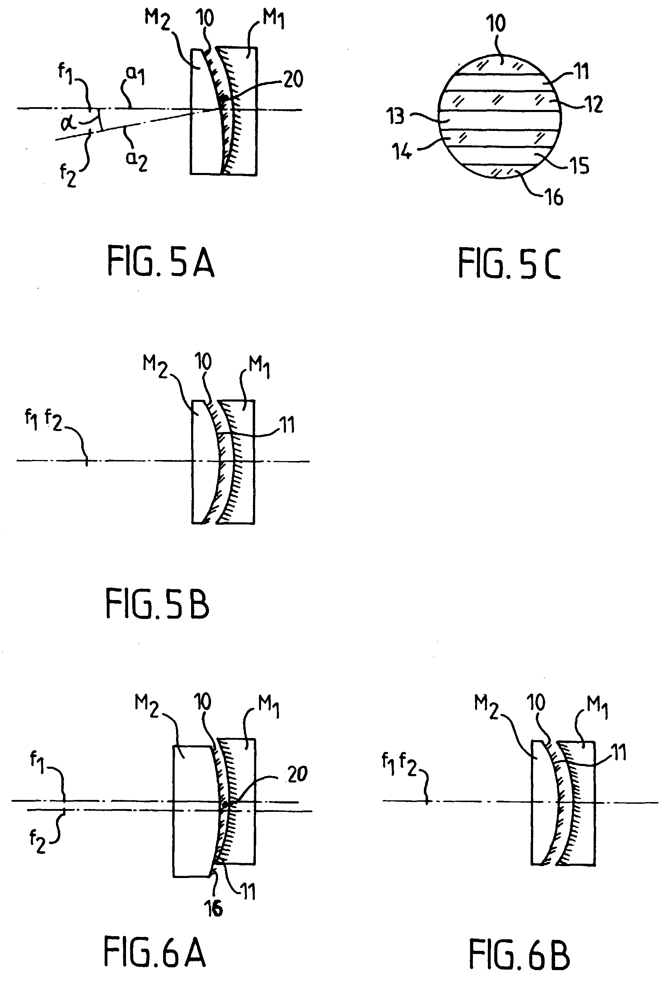

Les figures 5A, 5B et 5C représentent un premier mode de réalisation d'un système bifocal qui comporte un miroir sphérique à claire-voie $M_2$ et un miroir sphérique $M_1$, ces miroirs ont même focale.

On appelle ici miroir à claire-voie, un miroir porté par une surface sphérique dont seules des bandes parallèles 10 sont métallisées, laissant entre elles des bandes 11 non métallisées.

Les bandes métallisées 10 réfléchissent la partie du flux lumineux incident qu'elles reçoivent, alors que les bandes non métallisées 11 le transmettent.

Un tel miroir, représenté sur la figure 5C, peut être réalisé en protégeant les zones 11, 13, 15 destinées à la transmission lors de l'opération de métallisation des zones réfléchissantes 10, 12, 14, 16.

On peut aussi réaliser un miroir partiel en recouvrant toute la surface d'un composant optique d'un empilement de couches semi-réfléchissant.

Le miroir $M_1$, dit miroir complet, est en principe un miroir traditionnel entièrement métallisé, car c'est le composant le plus facilement disponible et qu'il donne satisfaction.

Le miroir $M_1$ doit recevoir le flux lumineux incident non intercepté par le miroir à claire-voie $M_2$. Il peut aussi s'agir d'un deuxième miroir à claire-voie dont les zones réfléchissantes sont complémentaires des zones réfléchissantes du premier miroir à claire-voie $M_2$.

Les miroirs $M_1$, $M_2$ peuvent être collés l'un à l'autre, l'espace 20 les séparant étant rempli de colle optique.

Les figures 6 et suivantes reprennent les mêmes notations que celles des figures 5 pour désigner les éléments de même nature.

Dans le mode de réalisation des figures 6, le miroir partiel $M_2$ est transversalement décalé par rapport au miroir $M_1$. Ces deux miroirs ont même focale.

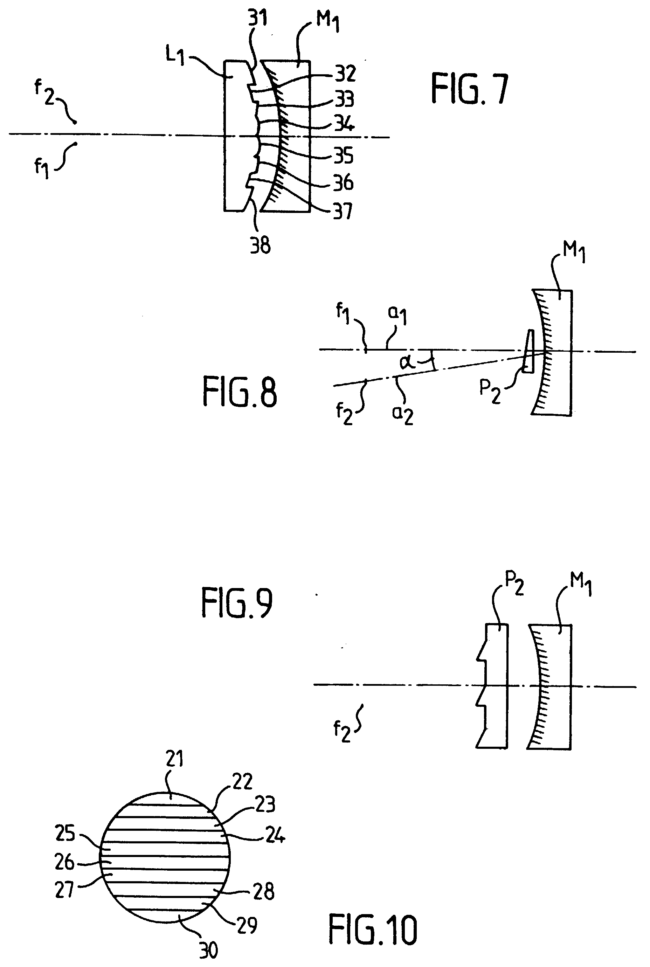

Dans le mode de réalisation de la figure 7, le faisceau est intercepté par une lentille $L_2$ bifocale résultante ayant ainsi deux foyers, respectivement $f_1$ et $f_2$, longitudinalement décalés l'un par rapport à l'autre.

Cette lentille bifocale est composée alternativement, dans le sens transversal, de zones de deux lentilles identiques décalées transversalement, l'une par rapport à l'autre. On obtient ainsi des éléments de deux natures différentes répartis dans la pupille, les uns agissant sur le flux lumineux pour le faire converger en $f_1$, les autres pour le faire converger en $f_2$. Ces éléments sont avantageusement des bandes 31, 38.

Enfin, dans le mode de réalisation de la figure 8, un petit prisme $p_2$ est placé devant le miroir $M_1$ et intercepte une partie du faisceau incident.

Le système bifocal a alors deux foyers, respectivement $f_1$ et $f_2$, transversalement décalés, les axes correspondants $a_1$ et $a_2$ formant un petit angle $\alpha$.

On améliore le résultat lorsque, conformément à la figure 9, des éléments prismatiques parallèles sont répartis sur la surface de la pupille et altement avec des éléments formant des lames à faces parallèles.

On peut encore réaliser un système bifocal, comme représenté sur la figure 10, en mettant en oeuvre un réseau à pas multiples constitué d'une succession alternative de deux types de zones, les premières 21, 23, 25, 27, 29 présentent des traits au pas $p_1$ et les deuxièmes $p_2$.

Ainsi, le flux lumineux reçu par le réseau est divisé en deux flux dispersés selon des angles différents, de préférence très légèrement différents, formant un système à double foyer transverse.

En mettant en oeuvre un réseau à pas variables, on peut obtenir un foyer continûment étendu dans le sens transverse.

De plus, il est avantageux, dans le cas d'un miroir à claire-voie, que le décalage transverse $f_1f_2$ soit dans la direction parallèle aux fentes.

## Revendications

1. Multiplexeur-démultiplexeur en longueur d'onde à fibres optiques comportant un système dispersif (1) ayant un plan de dispersion, au moins une fibre d'entrée (2) ayant une face de sortie, au moins une fibre de sortie (3) ayant une face d'entrée, des moyens (4) de conjugaison optique de la face de sortie de la fibre d'entrée avec la face d'entrée de la fibre de sortie,
caractérisé en ce que le système dispersif et les moyens de conjugaison forment un système optique à foyers multiples transverses (6) dans le plan de dispersion.

2. Multiplexeur-démultiplexeur en longueur d'onde à fibres optiques selon la revendication 1, caractérisé en ce qu'il comporte un miroir partiel ($M_2$) placé devant un miroir complet ($M_1$).

3. Multiplexeur-démultiplexeur selon la revendication 2, caractérisé en ce que le miroir partiel ($M_2$) est à claire-voie.

4. Multiplexeur-démultiplexeur selon la revendication 2, caractérisé en ce que le miroir partiel ($M_2$) est un miroir partiellement réfléchissant, uniformément sur toute sa surface.

5. Multiplexeur-démultiplexeur selon l'une des revendications 2 à 4, caractérisé en ce que le miroir partiel ($M_2$) et le miroir complet ($M_1$) sont des miroirs sphériques, de même focale, décalés l'un par rapport à l'autre, transversalement par rapport à leurs axes optiques.

6. Multiplexeur-démultiplexeur selon l'une des revendications 2 à 4, caractérisé en ce que le miroir partiel ($M_2$) et le miroir complet ($M_1$) sont des miroirs sphériques, de même focale, l'axe optique de l'un d'entre eux formant un petit angle $\alpha$ avec l'axe optique de l'autre.

7. Multiplexeur-démultiplexeur selon la revendication 1, caractérisé en ce qu'il comporte un élément optique à foyers multiples transverses travaillant en transmission.

8. Multiplexeur-démultiplexeur selon la revendication 7, caractérisé en ce que ledit élément optique est une lentille (4) à foyers multiples transverses.

9. Multiplexeur-démultiplexeur selon la revendication 7, caractérisé en ce que ledit élément optique est semi-prismatique ($p_1$).

10. Multiplexeur-démultiplexeur selon la revendication 1, caractérisé en ce qu'il comporte un réseau à pas multiples.

11. Multiplexeur-démultiplexeur selon la revendication 1, caractérisé en ce qu'il comporte un réseau à pas variables.

ART ANTERIEUR

ART ANTERIEUR

FIG.1

FIG.2

FIG.3

FIG.4

FIG. 5 A

FIG. 5 C

FIG. 5 B

FIG. 6 A

FIG. 6 B

FIG.7

FIG.8

FIG.9

FIG.10

EP 0 887 672 A1

Office européen
des brevets

**RAPPORT DE RECHERCHE EUROPEENNE**

Numéro de la demande

EP 98 40 1473

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.6) |
| A | Y.FUJII ET.AL.: "Optical demultiplexer utilizing an Ebert mounting silicon grating" JOURNAL OF LIGHTWAVE TECHNOLOGY., vol. 2, no. 5, octobre 1984, pages 731-734, XP002058271 NEW YORK US * le document en entier * | 1,9 | G02B6/293 G02B6/34 |
| A | M.SHIRASAKI ET.AL.: "Broadining of bandwidths in grating multiplexer by original dispersion dividing prism" ELECTRONICS LETTERS., vol. 22, no. 14, 3 juillet 1986, pages 764-765, XP002058272 ENAGE GB * le document en entier * | 1,2 | |
| A | EP 0 112 234 A (INSTRUMENTS SA) 27 juin 1984 * figures 5-7 * * page 4, ligne 17 - ligne 36 * | 1,2 | DOMAINES TECHNIQUES RECHERCHES (Int.Cl.6) G02B |
| A | DE 38 43 970 A (STANDARD ELEKTRIK LORENZ AG) 5 juillet 1990 * figure 9 * * colonne 6, ligne 39 - ligne 68 * * colonne 7, ligne 1 - ligne 16 * | 1,2 | |

Le présent rapport a été établi pour toutes les revendications

| Lieu de la recherche | Date d'achèvement de la recherche | Examinateur |
|---|---|---|
| LA HAYE | 16 octobre 1998 | Mathyssek, K |